# EUROPEAN PATENT SPECIFICATION

(11) **EP 4 462 943 B1**
(45) Date of publication and mention of the grant of the patent: **02.09.2026**
(21) Application number: 23737455.8
(22) Date of filing: 06.01.2023
(51) Int. Cl.: H04W 76/28, H04W 76/14, H04W 72/12, H04W 72/20, H04W 72/56, H04W 4/40, H04W 76/11, H04W 72/25, H04W 92/18

(54) **METHOD AND DEVICE FOR OPERATING SL DRX TIMER OF TERMINAL RECEIVING DCR MESSAGE IN NR V2X**
VERFAHREN UND VORRICHTUNG ZUM BETRIEB EINES SL-DRX-TIMERS EINES ENDGERÄTS, DAS EINE DCR-NACHRICHT IN NR V2X EMPFÄNGT
PROCÉDÉ ET DISPOSITIF POUR FAIRE FONCTIONNER UN TEMPORISATEUR DRX SL D'UN TERMINAL RECEVANT UN MESSAGE DCR DANS NR V2X

(30) Priority: 06.01.2022 KR 20220002035; 03.02.2022 KR 20220014016
(43) Date of publication of application: 13.11.2024
(73) Proprietor: LG Electronics Inc., Yeongdeungpo-gu Seoul 07336 (KR)
(72) Inventor: PARK, Giwon, Seoul 06772 (KR); BACK, Seoyoung, Seoul 06772 (KR)
(74) Representative: Plasseraud IP
(86) International application number: PCT/KR2023/000338
(87) International publication number: WO 2023/132707

(56) References cited:
- WO-A1-2021/182884
- WO-A1-2021/233392
- US-A1- 2021 400 745
- US-A1- 2023 104 340
- LENOVO ET AL: "Discussion on SL DRX for unicast", vol. RAN WG2, no. electronic; 20210412 - 20210420, 2 April 2021 (2021-04-02), XP052174962, Retrieved from the Internet <URL:https://ftp.3gpp.org/tsg_ran/WG2_RL2/TSGR2_113bis-e/Docs/R2-2103401.zip R2-2103401.doc> [retrieved on 20210402]
- INTERDIGITAL: "Summary of [POST113-e][703][V2X/SL] Details of Timer (InterDigital)", 3GPP TSG-RAN WG2 #113-BIS-E, R2-2102801, 9 April 2021 (2021-04-09), XP052178602
- LENOVO, MOTOROLA MOBILITY: "DRX Configuration for UC BC GC and its interaction with Sensing", 3GPP TSG-RAN WG2 #115-E, R2-2108014, 5 August 2021 (2021-08-05), XP052032406
- OPPO: "Discussion on DRX configuration and DRX timers", 3GPP TSG-RAN WG2 #114-E, R2-2104835, 11 May 2021 (2021-05-11), XP052006585
- HUAWEI, HISILICON: "Consideration on sidelink DRX for broadcast and groupcast", 3GPP TSG-RAN WG2 #115-E, R2-2107155, 6 August 2021 (2021-08-06), XP052033918

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication. WO2021/182884 A1, US2021/400745 A1 and document: LENOVO ET AL: "Discussion on SL DRX for unicast",3GPP DRAFT; R2-2103401 each relate to SL DRX.

### DISCLOSURE

### TECHNICAL SOLUTION

According to an aspect of the present disclosure, a method according to claim 1 is provided.

According to another aspect of the present disclosure, a first device according to claim 14 is provided.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a procedure for starting an SL DRX inactivity timer, according to one embodiment of the present disclosure.
FIG. 9 shows a procedure for discarding a DCR message, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

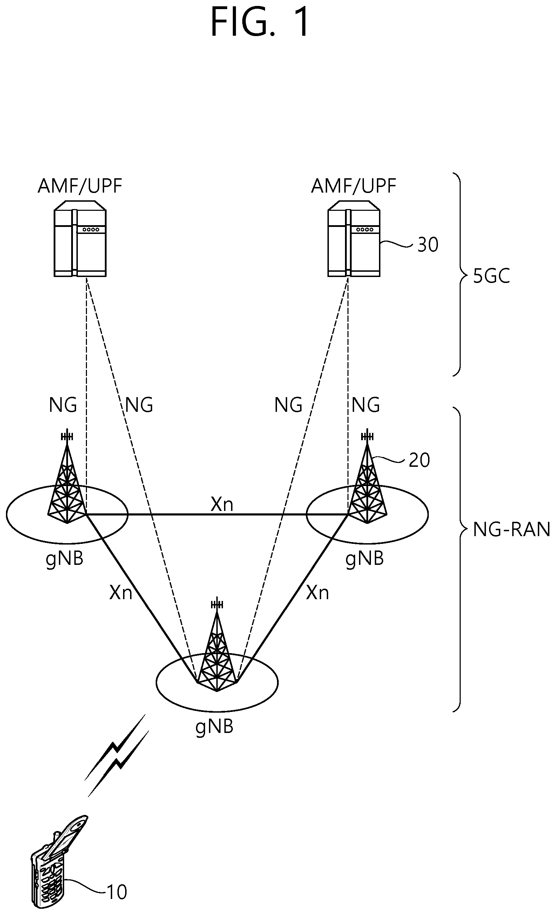

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

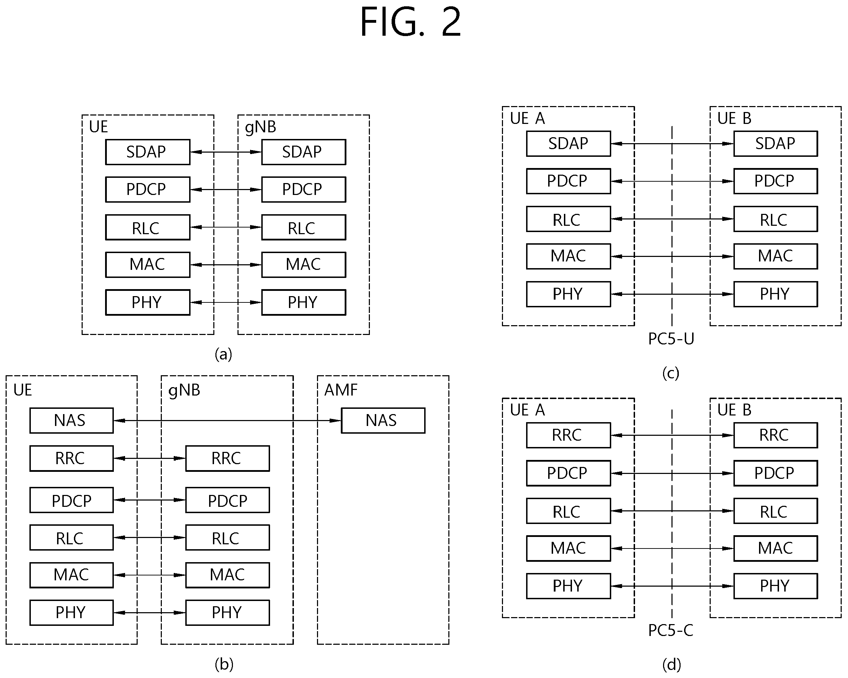

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an higher layer with an information transfer service through a physical channel. The physical layer is connected to a medium access control (MAC) layer which is an higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

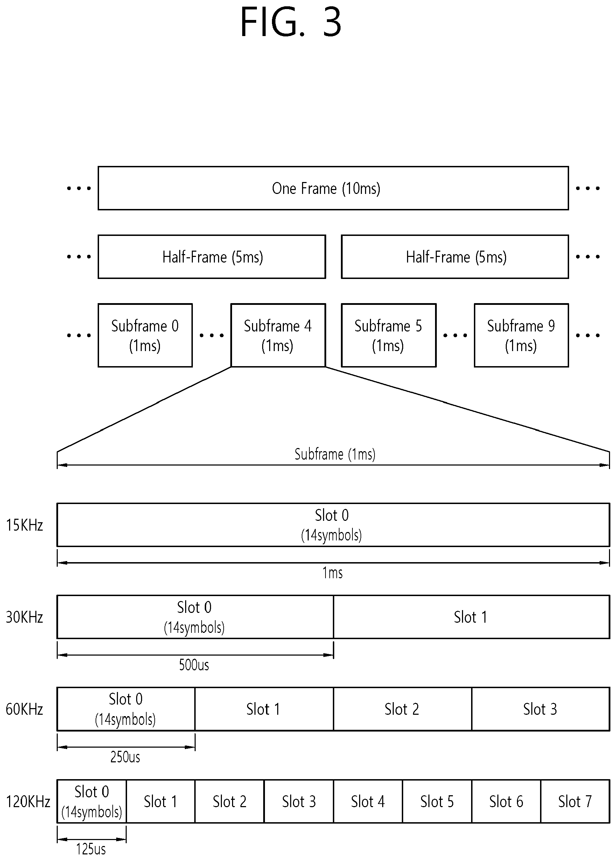

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

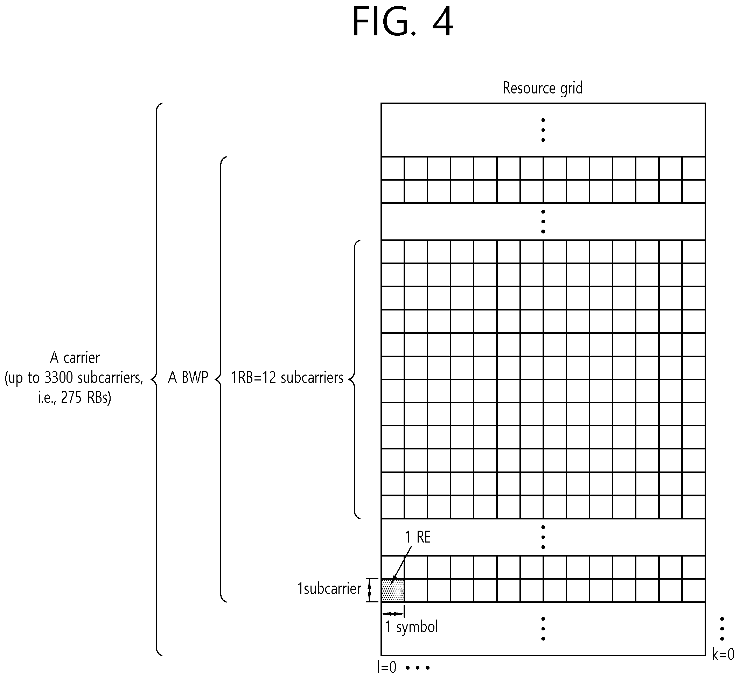

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

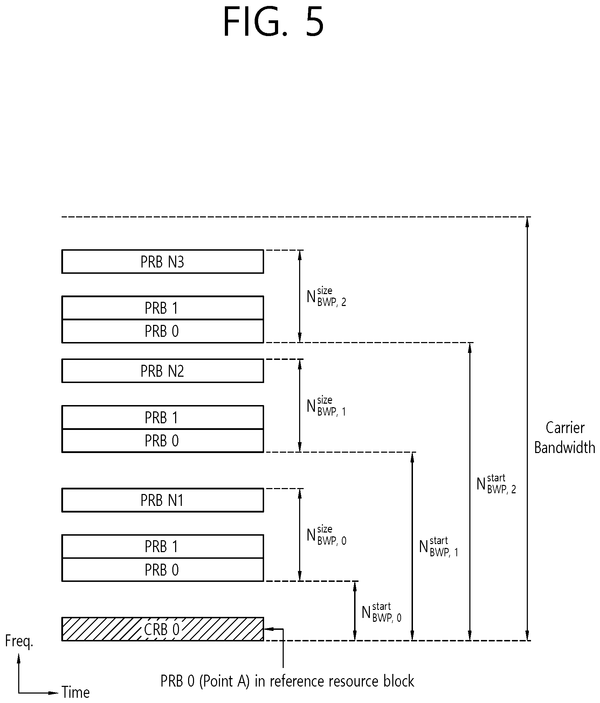

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

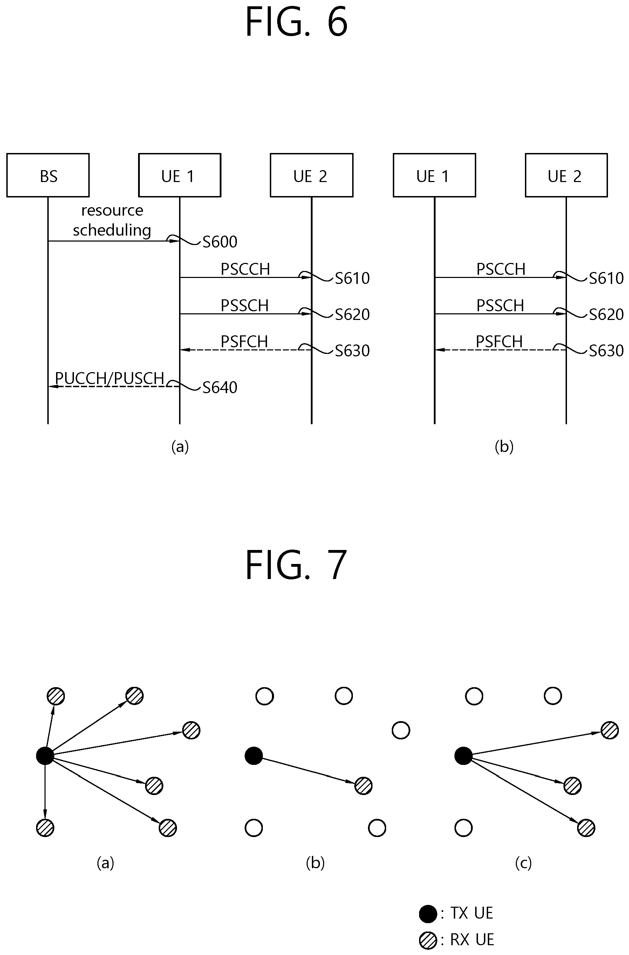

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log2(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Refer to the standard documentation, some procedures and technical specifications that are related to this disclosure are as follows.

Refer to the standard documentation, some procedures and technical specifications that are related to this disclosure are as follows.

**[Table 8]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | - *drx-onDurationTimer:* the duration at the beginning of a DRX cycle; |
| | - *drx-SlotOffset:* the delay before starting the *drx-onDurationTimer;* |
| | - *drx-InactivityTimer:* the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset:* the Long DRX cycle and *drx-StartOffset* which defines the subframe where the Long and Short DRX cycle starts; |
| | - *drx-ShortCycle* (optional): the Short DRX cycle; |
| | - *drx-ShortCycleTimer* (optional): the duration the UE shall follow the Short DRX cycle; |
| | - *drx-HARQ-RTT-TimerDL* (per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated *drx-onDurationTimer* in case DCP is monitored but not detected; |
| | - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| | - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |

**[Table 9]**

| | | | |
|---|---|---|---|
| When a DRX cycle is configured, the Active Time for Serving Cells in a DRX group includes the time while: | | | |
| | | | - *drx-onDurationTimer* or *drx-InactivityTimer* configured for the DRX group is running; or |
| | | | - *drx-RetransmissionTimerDL* or *drx-RetransmissionTimerUL* is running on any Serving Cell in the DRX group; or |
| | | | - *ra-ContentionResolutionTimer* (as described in clause 5.1.5) or *msgB-ResponseWindow* (as described in clause 5.1.4a) is running; or |
| | | | - a Scheduling Request is sent on PUCCH and is pending (as described in clause 5.4.4); or |
| | - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). | | |
| When DRX is configured, the MAC entity shall: | | | |
| | 1> if a MAC PDU is received in a configured downlink assignment: | | |
| | | 2> start the *drx-HARQ-RTT-TimerDL* for the corresponding HARQ process in the first symbol after the end of the corresponding transmission carrying the DL HARQ feedback; | |
| | | 2> stop the *drx-RetransmissionTimerDL* for the corresponding HARQ process. | |
| | 1> if a MAC PDU is transmitted in a configured uplink grant and LBT failure indication is not received from lower layers: | | |
| | | 2> start the *drx-HARQ-RTT-TimerUL* for the corresponding HARQ process in the first symbol after the end of the first repetition of the corresponding PUSCH transmission; | |
| | | 2> stop the *drx-RetransmissionTimerUL* for the corresponding HARQ process. | |
| | 1> if a *drx-HARQ-RTT-TimerDL* expires: | | |
| | | 2> if the data of the corresponding HARQ process was not successfully decoded: | |
| | | | 3> start the *drx-RetransmissionTimerDL* for the corresponding HARQ process in the first symbol after the expiry of *drx-HARQ-RTT-TimerDL.* |
| | 1> if a *drx-HARQ-RTT-TimerUL* expires: | | |
| | | 2> start the *drx-RetransmissionTimerUL* for the corresponding HARQ process in the first symbol after the expiry of *drx-HARQ-RTT-TimerUL.* | |
| | 1> if a DRX Command MAC CE or a Long DRX Command MAC CE is received: | | |
| | | 2> stop *drx-onDurationTimer* for each DRX group; | |
| | | 2> stop *drx-InactivityTimer* for each DRX group. | |
| | 1> if *drx-InactivityTimer* for a DRX group expires: | | |
| | | 2> if the Short DRX cycle is configured: | |
| | | | 3> start or restart *drx-ShortCycleTimer* for this DRX group in the first symbol after the expiry of *drx-InactivityTimer*; |
| | | | 3> use the Short DRX cycle for this DRX group. |
| | | 2> else: | |
| | | | 3> use the Long DRX cycle for this DRX group. |
| | 1> if a DRX Command MAC CE is received: | | |
| | | 2> if the Short DRX cycle is configured: | |
| | | | 3> start or restart *drx-ShortCycleTimer* for each DRX group in the first symbol after the end of DRX Command MAC CE reception; |
| | | | 3> use the Short DRX cycle for each DRX group. |
| | | 2> else: | |
| | | | 3> use the Long DRX cycle for each DRX group. |

**[Table 10]**

| | | | | |
|---|---|---|---|---|
| | | | 1> if *drx-ShortCycleTimer* for a DRX group expires: | |
| | | | | 2> use the Long DRX cycle for this DRX group. |
| | | | 1> if a Long DRX Command MAC CE is received: | |
| | | | | 2> stop *drx-ShortCycleTimer* for each DRX group; |
| | | | | 2> use the Long DRX cycle for each DRX group. |
| | | | 1> if the Short DRX cycle is used for a DRX group, and [(SFN × 10) + subframe number] modulo (*drx-ShortCycle*) = (*drx-StartOffset*) modulo (*drx-ShortCycle*): | |
| | | | | 2> start *drx-onDurationTimer* for this DRX group after *drx-SlotOffset* from the beginning of the subframe. |
| | | | 1> if the Long DRX cycle is used for a DRX group, and [(SFN × 10) + subframe number] modulo *(drx-LongCycle) = drx-StartOffset:* | |
| | | | | 2> if DCP monitoring is configured for the active DL BWP as specified in TS 38.213 [6], clause 10.3: |
| | | | 3> if DCP indication associated with the current DRX cycle received from lower layer indicated to start *drx-onDurationTimer,* as specified in TS 38.213 [6]; or | |
| | | | 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceld* of the SpCell identified by the C-RNTI while the *ra-ResponseWindow* is running (as specified in clause 5.1.4); or | |
| | | | 3> if *ps-Wakeup* is configured with value *true* and DCP indication associated with the current DRX cycle has not been received from lower layers: | |
| | | | | 4> start *drx-onDurationTimer* after *drx-SlotOffset* from the beginning of the subframe. |
| | | 2> else: | | |
| | | | 3> start *drx-onDurationTimer* for this DRX group after *drx-SlotOffset* from the beginning of the subframe. | |
| | NOTE 2: In case of unaligned SFN across carriers in a cell group, the SFN of the SpCell is used to calculate the DRX duration. | | | |
| | 1> if a DRX group is in Active Time: | | | |
| | | 2> monitor the PDCCH on the Serving Cells in this DRX group as specified in TS 38.213 [6]; | | |
| | | 2> if the PDCCH indicates a DL transmission: | | |
| | | | 3> start the *drx-HARQ-RTT-TimerDL* for the corresponding HARQ process in the first symbol after the end of the corresponding transmission carrying the DL HARQ feedback; | |
| | NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. | | | |
| | | | 3> stop the *drx-RetransmissionTimerDL* for the corresponding HARQ process. | |
| | | | 3> if the PDSCH-to-HARQ_feedback timing indicate a non-numerical k1 value as specified in TS 38.213 [6]: | |
| | | | | 4> start the *drx-RetransmissionTimerDL* in the first symbol after the PDSCH transmission for the corresponding HARQ process. |

**[Table 11]**

| | | | | |
|---|---|---|---|---|
| | | | 2> if the PDCCH indicates a UL transmission: | |
| | | | | 3> start the *drx-HARQ-RTT-TimerUL* for the corresponding HARQ process in the first symbol after the end of the first repetition of the corresponding PUSCH transmission; |
| | | | | 3> stop the *drx-RetransmissionTimerUL* for the corresponding HARQ process. |
| | | | 2> if the PDCCH indicates a new transmission (DL or UL) on a Serving Cell in this DRX group: | |
| | | | | 3> start or restart *drx-InactivityTimer* for this DRX group in the first symbol after the end of the PDCCH reception. |
| | | | 2> if a HARQ process receives downlink feedback information and acknowledgement is indicated: | |
| | | | | 3> stop the *drx-RetransmissionTimerUL* for the corresponding HARQ process. |
| | | 1> if DCP monitoring is configured for the active DL BWP as specified in TS 38.213 [6], clause 10.3; and | | |
| | | 1> if the current symbol n occurs within *drx-onDurationTimer* duration; and | | |
| | | 1> if *drx-onDurationTimer* associated with the current DRX cycle is not started as specified in this clause: | | |
| | | | 2> | if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause: |
| | | | | 3> not transmit periodic SRS and semi-persistent SRS defined in TS 38.214 [7]; |
| | | | | 3> not report semi-persistent CSI configured on PUSCH; |
| | | | 3> if *ps-TransmitPeriodicL1-RSRP* is not configured with value *true*: | |
| | | | | 4> not report periodic CSI that is L1-RSRP on PUCCH. |
| | | | 3> if *ps-TransmitOtherPeriodicCSI* is not configured with value *true*: | |
| | | | | 4> not report periodic CSI that is not L1-RSRP on PUCCH. |
| | 1> else: | | | |
| | | 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause: | | |
| | | | 3> not transmit periodic SRS and semi-persistent SRS defined in TS 38.214 [7] in this DRX group; | |
| | | | 3> not report CSI on PUCCH and semi-persistent CSI configured on PUSCH in this DRX group. | |
| | | 2> if CSI masking (*csi*-*Mask*) is setup by layers: | | |
| | | | upper 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and | |
| | | | | 4> not report CSI on PUCCH in this DRX group. |
| | NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). | | | |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. The MAC entity needs not to monitor the PDCCH if it is not a complete PDCCH occasion (e.g. the Active Time starts or ends in the middle of a PDCCH occasion). | | | | |

On the other hand, NR V2X in Release 16 did not support power saving operation of UEs, and NR V2X in Release 17 will support power saving operation of UEs (e.g., power saving UEs).

In this disclosure, a method for operating an SL DRX Timer of a UE using a Default DRX configuration in NR V2X is proposed. In the following description, "when, if, in case of" may be replaced by "based on".

The following describes an operation of receiving SL data and MAC filtering of a receiving UE according to the prior art.

### 1. operation when receiving sidelink (SL) unicast data

For example, when a receiving UE receives SL unicast data, the receiving UE may verify an L2 Source ID and an L2 Destination ID of the data being received. In this case, if it is verified that i) an L2 Source ID of the received data matches an L2 Source ID of a UE which has configured a unicast connection with itself (i.e., an L2 Destination ID associated with its unicast connection), and ii) an L2 Destination ID of the received data matches its L2 Source ID, the receiving UE may determine that the received SL data is SL unicast data that it should receive, and may deliver the received data (MAC PDU) to a higher layer (RLC, PDCP).

### 2. SL operation when receiving Groupcast/Broadcast data

For example, when a receiving UE receives SL unicast data, if an L2 destination ID of the received data is verified to match the groupcast/broadcast service (or L2 destination ID) that it is interested in receiving, the receiving UE may determine that the received SL data is SL groupcast/broadcast data that it is to receive and deliver the received data (MAC PDU) to a higher layer (RLC, PDCP).

In the following, embodiments related to a default SL DRX configuration are described.

According to one embodiment of the present disclosure, a default SL DRX configuration may be an SL DRX configuration that a receiving UE uses to monitor SL signaling before a unicast/groupcast/broadcast service is initiated.

For example, in the present disclosure, a PC5 unicast connection (or PC5 RRC connection) specific Common SL DRX configuration may be used to transmit/receive messages exchanged between UEs (or power saving UEs, or UEs performing SL DRX operation) before a PC5 unicast connection (or PC5 RRC connection) is configured. For example, prior to the PC5 unicast connection being configured, messages exchanged between UEs may include PC5-S unicast direct communication request (DCR)/direct communication accept/response (DCA), PC5-S broadcast DCR/PC5-S unicast DCA, other PC5-S messages exchanged to establish a PC5 unicast connection, PC5 RRC messages exchanged for UE capability negotiation, PC5 RRC messages to perform a PC5 RRC reconfiguration procedure, etc.

For example, a power saving UE (a UE performing an SL DRX operation) that has configured a PC5 unicast connection (or PC5 RRC connection) may use a common SL DRX configuration specific to the PC5 unicast connection (or PC5 RRC connection) to transmit/receive messages exchanged between UEs before configuring a new PC5 unicast connection (or PC5 RRC connection) with another UE.

Alternatively, for example, the above default SL DRX configuration may be used as a common SL DRX configuration for the purpose of monitoring PC5 RRC messages exchanged to configure a unicast SL DRX configuration.

For example, a UE (or a power-saving UE, or a UE performing an SL DRX operation) that has (or has not) configured a PC5 unicast connection (or a PC5 RRC connection) may use a PC5 unicast connection (or a PC5 RRC connection) specific common SL DRX configuration to monitor channels (e.g., PSCCH/PSSCH/PSFCH/PSBCH) or signals (S-SSB) of another UE.

According to one embodiment of the present disclosure, a default SL DRX configuration may be used as an SL DRX configuration for monitoring messages for group formation of groupcast.

For example, a default SL DRX configuration may be used as an SL DRX configuration to monitor an SL signaling before transmitting/receiving groupcast service data (before groupcast service is initiated).

For example, a default SL DRX configuration may be used as an SL DRX configuration for monitoring SL signaling before transmitting/receiving broadcast service data (before broadcast service is initiated).

According to one embodiment of the present disclosure, a service specific SL DRX configuration may be used as an SL DRX configuration for transmitting/receiving each cast communication after the unicast/groupcast/broadcast service is initiated.

According to one embodiment of the present disclosure, a receiving UE supporting an SL DRX operation may apply a default SL DRX configuration to monitor a PC5-S unicast DCR message, and may monitor a PC5-S unicast DCR message during an on-duration timer interval of a default SL DRX configuration. Thereafter, when a PC5-S unicast DCR message is received during an on-duration timer operation interval, a receiving UE may verify whether an L1 destination ID included in the SCI related to the PC5-S unicast DCR message matches its L1 source ID. And, if the L1 Destination ID matches its L1 Source ID, the receiving UE may determine that the received DCR message is a PC5-S Unicast DCR message that it is to receive, and may start an SL DRX Inactivity timer in a default SL DRX configuration.

Then, for example, if a MAC PDU is successfully decoded and an L2 destination ID is obtained, a receiving UE may compare the L2 destination ID with its L2 source ID. And, if the L2 destination ID and its L2 source ID are matched, the received PC5-S unicast DCR message (MAC PDU) may be delivered to a higher layer (RLC, PDCP, V2X layer).

Alternatively, for example, if a MAC PDU is successfully decoded and an L2 destination ID is obtained, a receiving UE may compare the L2 destination ID with its L2 source ID. And, if it is verified that the L2 destination ID and its L2 source ID do not match, a receiving UE may stop an SL DRX inactivity timer that it has started and discard the received PC5-S unicast DCR message (MAC PDU) without delivering it to a higher layer (RLC, PDCP, V2X layer).

For example, in the prior art, when SL unicast data is received, a receiving UE may check an (L1/L2) source ID and an (L1/L2) destination ID of the received data and verify whether its (L1/L2) destination ID and (L1/L2) source ID match. And, a receiving UE may deliver the received data to a higher layer only if all the above IDs are matched. However, since a PC5-S Unicast DCR message is a unicast message delivered before configuring a unicast with another UE, if a UE transmitting a PC5-S unicast DCR message is maintaining/keeping the UE's L2 source ID information (it may be a status where a unicast connection is not configured now.) that it has connected to previously, the UE transmitting the DCR message may configure the maintained/kept L2 source ID of the counterpart UE as an L2 destination ID, and transmit a PC5-S unicast DCR message by including it inso SCI among with its L2 ource ID.

However, a UE that receives a PC5-S unicast DCR message cannot determine whether a UE that transmitted the DCR message is the intended UE even if it verifies an L2 source ID and L2 destination ID included in the received PC5 unicast DCR message, based on a pair of L2 source/destination IDs. It is because since there is no unicast connection with a UE with an L2 source ID, whether it is a counterpart UE cannot be determined even if it verifies the L2 source ID. Therefore, as proposed in the present disclosure, a UE that receives a PC5-S unicast DCR message may determine whether it should deliver the PC5-S unicast DCR message to a higher layer based solely on the L1/L2 destination ID of the received data (i.e., without regard to a source ID of the received data), and may also determine whether to operate an SL DRX inactivity timer.

In addition, for example, in the present disclosure, when a PC5-S message is received in a unicast scheme for a unicast configuration, prior to the UE configuring the unicast, the receiving UE may verify whether an L1 destination ID included in SCI related to a unicast PC5-S message matches its L1 source ID. And, if an L1 destination ID matches its L1 source ID, a receiving UE may determine that the received PC5-S message is a unicast PC5-S message that it is to receive and may start an SL DRX inactivity timer of a default SL DRX configuration. Further, for example, if a MAC PDU decoding is successful and an L2 destination ID is obtained, a receiving UE may verify whether the L2 destination ID matches its L2 source ID by comparing the L2 destination ID with its own L2 source ID. And, if the L2 destination ID is matched with its L2 source ID, the receiving UE may deliver the received unicast PC5-S message (MAC PDU) to a higher layer (RLC, PDCP, V2X layer).

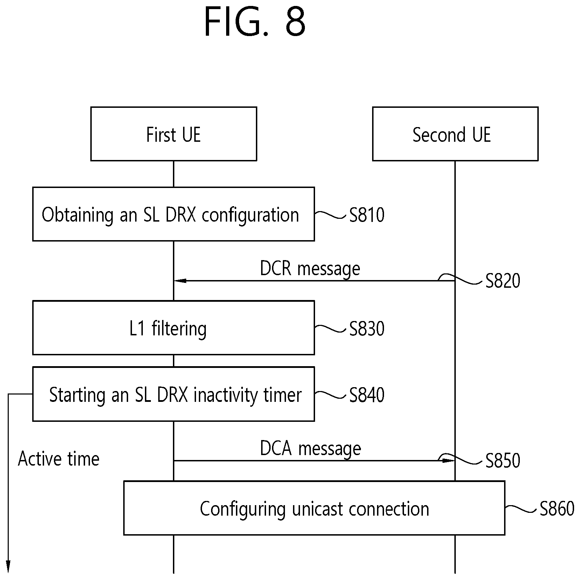

FIG. 8 shows a procedure for starting an SL DRX inactivity timer, according to one embodiment of the present disclosure. The embodiment of FIG. 8 may be combined with various embodiments of the present disclosure.

Referring to FIG. 8, a first UE and a second UE desiring to configure a unicast connection with the first UE are shown. In step S810, the first UE may obtain an SL DRX configuration for performing an SL DRX operation. For example, the SL DRX configuration may be a default SL DRX configuration. The default SL DRX configuration may be a SL DRX configuration that is pre-configured to the UE or configured via higher layer signaling. For example, the SL DRX configuration may include information for an SL DRX timer described in the present disclosure. For example, the SL DRX timer may include an SL DRX inactivity timer, an SL DRX HARQ RTT timer, an SL DRX retransmission timer, an SL DRX on-duration timer, and the like.

In step S820, the second UE may transmit a DCR message to the first UE. For example, the DCR message may be transmitted as included in a MAC PDU. For example, the DCR message may be transmitted in a unicast manner. In this case, the cast type indicator of the SCI related to the transmission of the DCR message may represent unicast.

In step S830, the first UE may perform L1 filtering. That is, it may determine whether a destination L1 ID included in the received SCI and a source L1 ID of the first UE itself are the same by comparing them. Here, whereas L1 filtering of unicast communication according to the prior art requires further comparison of a source L1 ID included in SCI with a destination L1 ID kept by the first UE itself, according to an embodiment of the present disclosure, a source L1 ID included in the received SCI is not considered in L1 filtering. It is assumed here that L1 filtering is successful.

In step S840, the first UE may start an SL DRX inactivity timer if the L1 filtering is successful, i.e., if a source L1 ID of the first UE and a destination L1 ID included in the received SCI are the same.

In step S850, the first UE may transmit a direct communication accept (DCA) message to the second UE in response to the DCR message. In step S860, the first UE and the second UE may configure a unicast connection with each other based on the DCR message, the DCA message, and an active time.

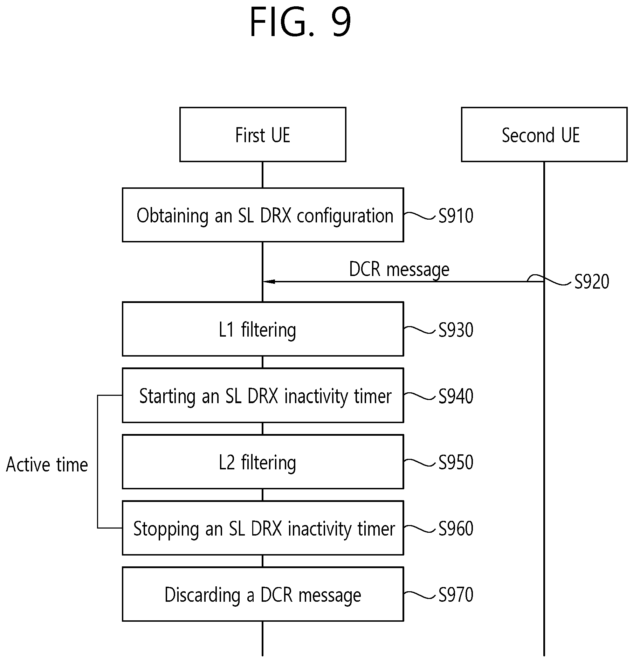

FIG. 9 shows a procedure for discarding a DCR message, according to one embodiment of the present disclosure. The embodiment of FIG. 9 may be combined with various embodiments of the present disclosure.

Referring to FIG. 9, in step S910, a first UE may obtain an SL DRX configuration for performing an SL DRX operation, as in the embodiment of FIG. 8. For example, the SL DRX configuration may be a default SL DRX configuration. The default SL DRX configuration may be an SL DRX configuration that is pre-configured to a UE or configured via higher layer signaling. For example, the SL DRX configuration may include information for an SL DRX timer as described in the present disclosure. For example, the SL DRX timer may include an SL DRX inactivity timer, an SL DRX HARQ RTT timer, an SL DRX retransmission timer, an SL DRX on-duration timer, and the like.

At step S920, the second UE may transmit a DCR message to the first UE. For example, the DCR message may be transmitted as included in a MAC PDU. For example, the DCR message may be transmitted in a unicast manner. In this case, the cast type indicator of SCI related to the transmission of the DCR message may represent unicast.

In step S930, the first UE may perform L1 filtering. That is, it may compare a destination L1 ID included in the received SCI with a source L1 ID of the first UE itself and determine whether they are the same. Here, L1 filtering of unicast communication according to the prior art requires further comparison of a source L1 ID included in SCI with a destination L1 ID kept by the first UE itself, but according to an embodiment of the present disclosure, a source L1 ID included in the received SCI is not considered in L1 filtering. It is assumed here that L1 filtering is successful.

In step S940, the first UE may start an SL DRX inactivity timer if the L1 filtering is successful, i.e., if a source L1 ID of the first UE and a destination L1 ID included in the received SCI are the same.

In step S950, the first UE may perform L2 filtering. That is, it may compare a partial destination ID included in a MAC header of a received MAC PDU with its own L2 source ID and determine whether they are the same. Here, while L2 filtering of unicast communication according to the prior art requires further comparison of a partial source ID included in a MAC header with a destination L2 ID kept by the first UE itself, according to embodiments of the present disclosure, a partial source ID included in a MAC header of a received MAC PDU is not considered in L2 filtering. It is assumed here that L2 filtering fails.

In step S960, the second UE may stop a running SL DRX inactivity timer based on the L2 filtering failure. And, in step S970, the second UE may discard the received DCR message based on the L2 filtering failure.

The default SL DRX configuration, service specific SL DRX configuration proposed in this disclosure may be a solution applicable to the SL groupcast and SL broadcast not only to SL unicast.

The operation of the present disclosure may be applicable/extendable to an SL DRX retransmission timer (or an SL DRX timer causing it to operate as an Active Time) as well as an SL DRX inactive timer operation.

An SL DRX configuration referred to in the present disclosure may include at least one of the following parameters.

**[Table 12]**

| | |
|---|---|
| | ● Sidelink DRX configurations |
| *SL drx-onDurationTimer:* the duration at the beginning of a SL DRX Cycle; | |
| ✔ *SL drx-SlotOffset:* the delay before starting the sl *drx-onDurationTimer;* | |
| ✔ *SL drx-InactivityTimer:* the duration after the PSCCH occasion in which a PSCCH indicates a new SL transmission for the MAC entity; | |
| ✔ *SL drx-StartOffset:* the subframe where the SL DRX cycle start; | |
| ✔ *SL drx-Cycle:* the SL DRX cycle; | |
| ✔ *SL drx-HARQ-RTT-Timer* (per HARQ process or per sidelink process): the minimum duration before an assignment for HARQ retransmission is expected by the MAC entity. | |
| ✔ *SL drx-RetransmissionTimer* (per HARQ process or per sidelink process): the maximum duration until a retransmission is received. | |

For example, the Uu DRX timer below referenced in this disclosure may be used for the following purposes.

drx-HARQ-RTT-TimerSL timer: it may represent an interval where a transmitting UE (UE supporting a Uu DRX operation) performing SL communication based on SL resource allocation mode 1 does not perform monitoring for a PDCCH (or, DCI) for SL mode 1 resource allocation from a base station.

drx-RetransmissionTimerSL timer: It may indicate an interval during which a transmitting UE (UE supporting a Uu DRX operation) performing SL communication based on SL resource allocation mode 1 performs monitoring for a PDCCH (or, DCI) for SL mode 1 resource allocation from a base station.

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposal in this disclosure may be a solution that may also be applied and extended to address the problem of loss due to interruption in Uu bandwidth part (BWP) switching.

Furthermore, the proposal of the present disclosure may be a solution that may also be applied and extended to address the problem of loss due to interruption caused by SL BWP switching, for example, when a UE supports SL multiple BWP.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations.

Furthermore, for example, an on-duration term referred to in the present disclosure may be extended and interpreted as an active time interval, and an off-duration term referred to in the present disclosure may be extended and interpreted as a sleep time interval. For example, an active time may mean a period of time when a UE is operating in a wake up state (RF module is on) to receive/transmit radio signals. For example, a sleep time may mean an interval during which a UE operates in a sleep mode state (RF module is off) to save power. For example, in the sleep time, it does not imply that a transmitting UE is obligated to operate in sleep mode, i.e., if needed, the UE may be allowed to operate in active time for a short period of time to perform a sensing operation/transmission operation, even during a sleep period.

Furthermore, for example, whether (some of) the proposed schemes/rules are applied and/or the related parameter (e.g., a threshold value) may be configured specifically (or, differently, or independently), according to a resource pool (e.g., a resource pool where a PSFCH is configured, a resource pool where a PSFCH is not configured), the congestion level, the service priority (and/or type), QoS requirement (e.g., latency, reliability) or PQI, a traffic type (e.g., (a)periodic generation), an SL transmission resource allocation mode (mode 1, mode 2), etc.

For example, whether the proposed rule of the present disclosure is applied (and/or the related parameter setting value) may be configured specifically (and/or, independently, and/or, differently), for at least one of a resource pool, the service/packet type (and/or the priority), a QoS profile or a QoS requirement (e.g., URLLC/EMBB traffic, reliability, latency), PQI, PFI, a cast type (e.g., unicast, groupcast, broadcast), the (resource pool) congestion level (e.g., CBR), an SL HARQ feedback scheme (e.g., NACK only feedback, ACK/NACK feedback), a case of a transmission of a MAC PDU with a HARQ feedback enabled (and/or a MAC PDU with a HARQ feedback disabled), whether a PUCCH based SL HARQ feedback reporting operation is configured, a case of (not)performing pre-emption (and/or re-evaluation) (or, resource reselection based on it), an (L2 or L1) (source and/or destination) identifier, an (L2 or L1) (the combination of a source layer ID and a destination layer ID) identifier, an (L2 or L1) (a combination of, a pair of a source layer ID and a destination layer ID, and a cast type) identifier, the direction of a pair of a source layer ID and a destination layer ID, a PC5 RRC connection/link, a case of performing an SL DRX, an SL mode type (resource allocation mode 1, resource allocation mode 2), performing (a)periodic resource reservation.

For example, the term certain time, as referred to in the proposal of this disclosure, may refer to a time when a UE operates as active time for a predefined amount of time to receive an SL signal or SL data from a counterpart UE, or a time when it operates as active time for a time or a specific timer (an SL DRX retransmission timer, an SL DRX inactivity timer, or a timer guaranteeing that a receiving UE operates as active time in a DRX operation of the receiving UE).

Further, for example, the proposals of this disclosure and whether the proposed rules are applied (and/or the related parameter setting values) may also be applied to mmWave SL operation.

According to the prior art, between UEs that have configured a unicast connection, when one UE (a first UE) releases a source ID of the counterpart UE (a second UE), and if the second UE transmits a DCR message to the first UE in a unicast manner, the first UE may not be able to perform a successful L1/L2 filtering operation since the first UE has deleted the source ID of the second UE. According to an embodiment of the present disclosure, even though a DCR message is transmitted in a unicast manner, successful operation of an SL DRX inactivity timer may be possible even in the above assumed situation because a source ID of a UE transmitting a DCR message is not used for the L1/L2 filtering operation. Therefore, the unicast establishment procedure may be performed successfully and power saving effects may occur.

According to one embodiment of the present disclosure, a UE operation for selecting a value of an SL DRX inactivity timer in a groupcast is proposed. For example, when a receiving UE receives a PSCCH/PSSCH (SCI/SL data) from a transmitting UE and successfully decodes it (SCI/MAC PDU), the receiving UE may start an SL DRX inactivity timer by selecting the SL DRX inactivity timer with the largest value among the SL DRX inactivity timer values in an SL DRX configuration that are mapped to the QoS profiles related to the L2 destination ID of the received groupcast message. In other words, if decoding for both SCI and MAC PDUs is successful, a receiving UE may start an SL DRX inactivity timer based on an L2 destination ID at the same time that it selects an SL DRX timer value based on an L2 destination ID. That is, for example, a receiving UE may start an SL DRX inactivity timer only if the L2 destination ID of the received groupcast message is the L2 destination ID of the groupcast message in which the receiving UE is interested.

For example, if a receiving UE receives a PSCCH/PSSCH (SCI/SL data) from a transmitting UE and succeeds in decoding the SCI but fails to decode the MAC PDU, a receiving UE may list the L2 destination IDs of all groupcast services of interest that have the same L1 destination ID as the L1 destination ID of the received groupcast message. Then, the receiving UE may start an SL DRX inactivity timer by selecting the SL DRX inactivity timer with the largest value among the SL DRX inactivity timer values in an SL DRX configuration that are mapped to the QoS profiles related to the listed L2 destination IDs. That is, if SCI decoding succeeds but MAC PDU decoding fails, a receiving UE may start an SL DRX inactivity timer based on an L1 destination ID at the same time as it selects an SL DRX timer value based on an L1 destination ID. That is, for example, a receiving UE may start an SL DRX inactivity timer only if the L1 destination ID of the received groupcast message is the L1 destination ID of the groupcast message it is interested in.

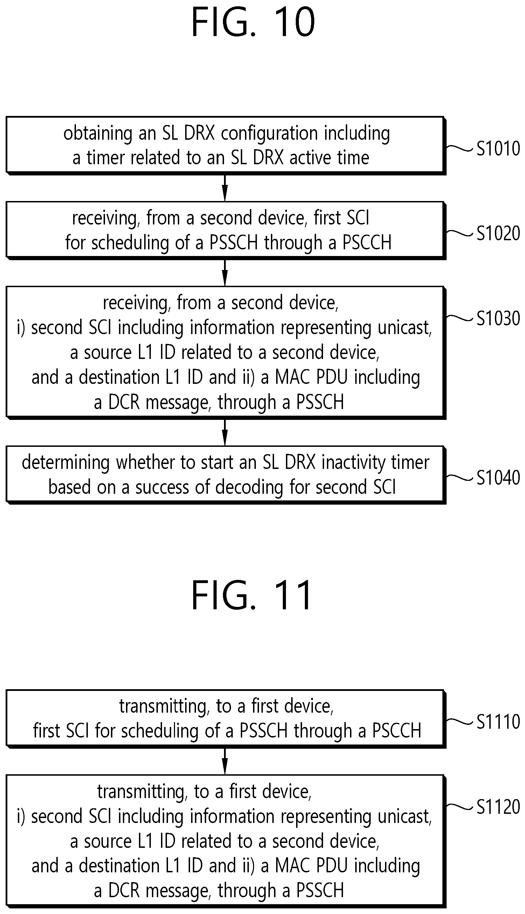

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device obtains a sidelink, SL, discontinuous reception, DRX, configuration including a timer related to an SL DRX active time. In step S 1020, the first device receives, from a second device, first sidelink control information, SCI, for scheduling of a physical sidelink shared channel, PSSCH, through a physical sidelink control channel, PSCCH. In step S1030, the first device receives, from the second device, i) second SCI including information representing unicast, a source layer, L,1 ID related to the second device, and a destination L1 ID and ii) a medium access control, MAC, protocol data unit, PDU, including a direct communication request, DCR, message, through the PSSCH. In step S1040, the first device determines whether to start an SL DRX inactivity timer based on a success of decoding for the second SCI. For example, only the destination L1 ID may be used in the determination.

For example, the SL DRX configuration may be a default SL DRX configuration.

For example, the SL DRX inactivity timer may be determined to be started.

For example, the SL DRX inactivity timer may be started based on the destination ID being the same as a source L1 ID related to the first device.

For example, the SL DRX inactivity timer may be determined to be started based on a success of decoding for the second SCI and the MAC PDU, and an operation of the started SL DRX inactivity timer may be maintained based on a partial destination ID included in a MAC header in the MAC PDU being the same as a source L2 ID related to the first device.

For example, the SL DRX inactivity timer may be determined to be started based on a success of decoding for the second SCI and the MAC PDU, and an operation of the started SL DRX inactivity timer may be stopped based on a partial destination ID included in a MAC header in the MAC PDU being different from a source L2 ID related to the first device.

For example, the DCR message may be delivered to a higher layer, based on a partial destination ID included in a MAC header of the MAC PDU being the same as a source L2 ID related to the first device.

For example, the DCR message may be discarded, based on a partial destination ID included in a MAC header of the MAC PDU being different from a source L2 ID related to the first device.

For example, the second device may be a device that previously configured a unicast connection with the first device, and the source ID may be deleted, based on a release of the configured unicast connection.

For example, the DCR message may be included in a temporally first TB received from the second device.

For example, the MAC PDU may be a temporally first MAC PDU received from the second device.

For example, additionally, the first device may transmit, to the second device, a direct communication accept, DCA, message in response to the DCR message; and configure a unicast connection with the second device based on the transmission of the DCA message.

The embodiments described above may be applied to various devices described below. First, a processor 102 of a first device 200 may obtain a sidelink, SL, discontinuous reception, DRX, configuration including a timer related to an SL DRX active time. And, the processor 102 of the first device 100 may control a transceiver 106 to receive, from a second device 200, first sidelink control information, SCI, for scheduling of a physical sidelink shared channel, PSSCH, through a physical sidelink control channel, PSCCH. And, the processor 102 of the first device 100 may control the transceiver 106 to receive, from the second device 200 i) second SCI including information representing unicast, a source layer, L,1 ID related to the second device 200, and a destination L1 ID and ii) a medium access control, MAC, protocol data unit, PDU, including a direct communication request, DCR, message, through the PSSCH. And, the processor 102 of the first device 100 may determine whether to start an SL DRX inactivity timer based on a success of decoding for the second SCI. For example, only the destination L1 ID may be used in the determination.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration including a timer related to an SL DRX active time; receive, from a second device, first sidelink control information, SCI, for scheduling of a physical sidelink shared channel, PSSCH, through a physical sidelink control channel, PSCCH; receive, from the second device, i) second SCI including information representing unicast, a source layer, L,1 ID related to the second device, and a destination L1 ID and ii) a medium access control, MAC, protocol data unit, PDU, including a direct communication request, DCR, message, through the PSSCH; and determine whether to start an SL DRX inactivity timer based on a success of decoding for the second SCI, wherein only the destination L1 ID may be used in the determination.

For example, the SL DRX configuration may be a default SL DRX configuration.

For example, the SL DRX inactivity timer may be determined to be started.

For example, the SL DRX inactivity timer may be started based on the destination ID being the same as a source L1 ID related to the first device.

For example, the SL DRX inactivity timer may be determined to be started based on a success of decoding for the second SCI and the MAC PDU, and an operation of the started SL DRX inactivity timer may be maintained based on a partial destination ID included in a MAC header in the MAC PDU being the same as a source L2 ID related to the first device.

For example, the SL DRX inactivity timer may be determined to be started based on a success of decoding for the second SCI and the MAC PDU, and an operation of the started SL DRX inactivity timer may be stopped based on a partial destination ID included in a MAC header in the MAC PDU being different from a source L2 ID related to the first device.

For example, the DCR message may be delivered to a higher layer, based on a partial destination ID included in a MAC header of the MAC PDU being the same as a source L2 ID related to the first device.

For example, the DCR message may be discarded, based on a partial destination ID included in a MAC header of the MAC PDU being different from a source L2 ID related to the first device.

For example, the second device may be a device that previously configured a unicast connection with the first device, and the source ID may be deleted, based on a release of the configured unicast connection.

For example, the DCR message may be included in a temporally first TB received from the second device.

For example, the MAC PDU may be a temporally first MAC PDU received from the second device.

For example, additionally, the first device may transmit, to the second device, a direct communication accept, DCA, message in response to the DCR message; and configure a unicast connection with the second device based on the transmission of the DCA message.

According to an embodiment of the present disclosure, a device adapted to control a first user equipment, UE, may be proposed. For example, the device may comprise: one or more processors; and one or more memories operably connectable to the one or more processors and storing instructions may be proposed. For example, the one or more processors may execute the instructions to: obtain a sidelink, SL, discontinuous reception, DRX, configuration including a timer related to an SL DRX active time; receive, from a second UE, first sidelink control information, SCI, for scheduling of a physical sidelink shared channel, PSSCH, through a physical sidelink control channel, PSCCH; receive, from the second UE, i) second SCI including information representing unicast, a source layer, L,1 ID related to the second UE, and a destination L1 ID and ii) a medium access control, MAC, protocol data unit, PDU, including a direct communication request, DCR, message, through the PSSCH; and determine whether to start an SL DRX inactivity timer based on a success of decoding for the second SCI, wherein only the destination L1 ID may be used in the determination.

According to an embodiment of the present disclosure, a non-transitory computer-readable storage medium storing instructions may be proposed. For example, the instructions, when executed, may cause a first device to: obtain a sidelink, SL, discontinuous reception, DRX, configuration including a timer related to an SL DRX active time; receive, from a second device, first sidelink control information, SCI, for scheduling of a physical sidelink shared channel, PSSCH, through a physical sidelink control channel, PSCCH; receive, from the second device, i) second SCI including information representing unicast, a source layer, L,1 ID related to the second device, and a destination L1 ID and ii) a medium access control, MAC, protocol data unit, PDU, including a direct communication request, DCR, message, through the PSSCH; and determine whether to start an SL DRX inactivity timer based on a success of decoding for the second SCI, wherein only the destination L1 ID may be used in the determination.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may transmit, to a first device, first sidelink control information, SCI, for scheduling of a physical sidelink shared channel, PSSCH, through a physical sidelink control channel, PSCCH. In step S1120, the second device may transmit, to the first device, i) second SCI including information representing unicast, a source layer, L,1 ID related to the second device, and a destination L1 ID and ii) a medium access control, MAC, protocol data unit, PDU, including a direct communication request, DCR, message, through the PSSCH. For example, whether to start an SL DRX inactivity timer may be determined by the first device, based on a success of decoding for the second SCI, and only the destination L1 ID may be used in the determination.

For example, additionally, the second device may receive, from the first device, a direct communication accept, DCA, message in response to the DCR message. For example, the SL DRX inactivity timer may be started by the first device based on the destination ID and a source L1 ID related to the first device being the same, and the DCR message may be delivered to a higher layer of the first device, based on a partial destination ID included in a MAC header in the MAC PDU and a source L2 ID related to the first device being the same.

The embodiments described above may be applied to various devices described below. First, a processor 202 of a second device 200 may control a transceiver 206 to transmit, to a first device 100, first sidelink control information, SCI, for scheduling of a physical sidelink shared channel, PSSCH, through a physical sidelink control channel, PSCCH. And, the processor 202 of the second device 200 may control the transceiver 206 to transmit, to the first device 100, i) second SCI including information representing unicast, a source layer, L,1 ID related to the second device 200, and a destination L1 ID and ii) a medium access control, MAC, protocol data unit, PDU, including a direct communication request, DCR, message, through the PSSCH. For example, whether to start an SL DRX inactivity timer may be determined by the first device 100, based on a success of decoding for the second SCI, and only the destination L1 ID may be used in the determination.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, first sidelink control information, SCI, for scheduling of a physical sidelink shared channel, PSSCH, through a physical sidelink control channel, PSCCH; and transmit, to the first device, i) second SCI including information representing unicast, a source layer, L,1 ID related to the second device, and a destination L1 ID and ii) a medium access control, MAC, protocol data unit, PDU, including a direct communication request, DCR, message, through the PSSCH, wherein whether to start an SL DRX inactivity timer may be determined by the first device, based on a success of decoding for the second SCI, and wherein only the destination L1 ID may be used in the determination.

For example, the one or more transceivers may execute the instructions to: receive, from the first device, a direct communication accept, DCA, message in response to the DCR message, wherein the SL DRX inactivity timer may be started by the first device based on the destination ID and a source L1 ID related to the first device being the same, and wherein the DCR message may be delivered to a higher layer of the first device, based on a partial destination ID included in a MAC header in the MAC PDU and a source L2 ID related to the first device being the same.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

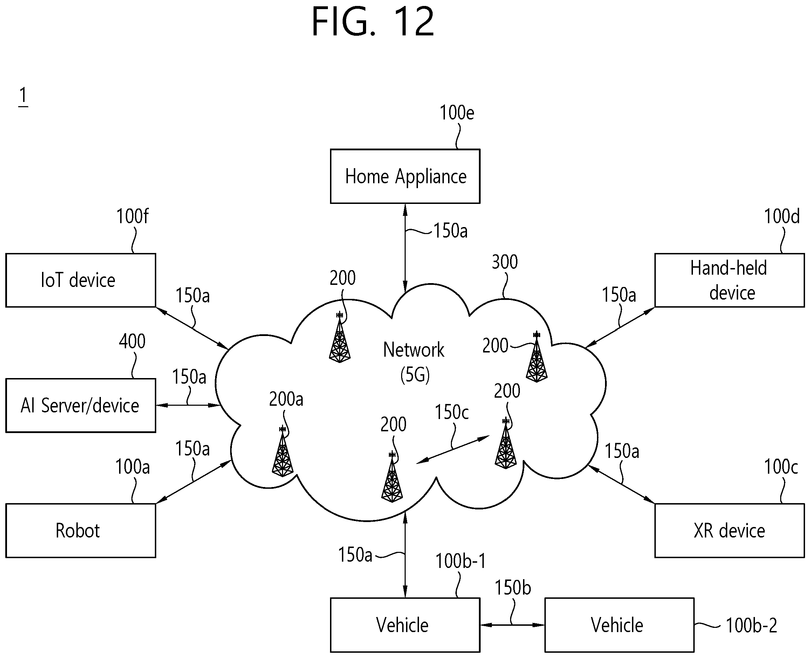

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

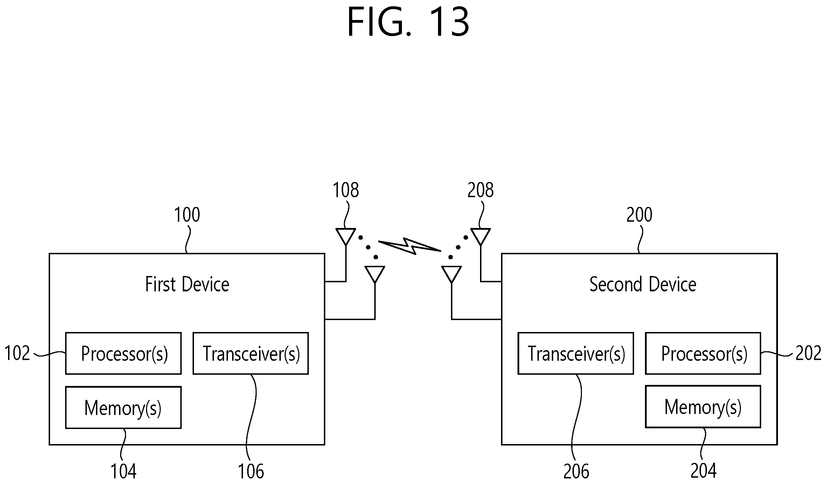

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

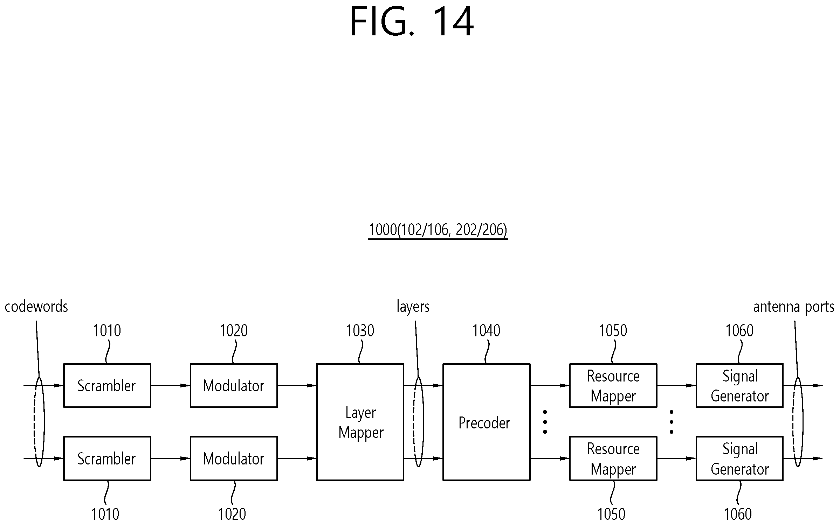

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

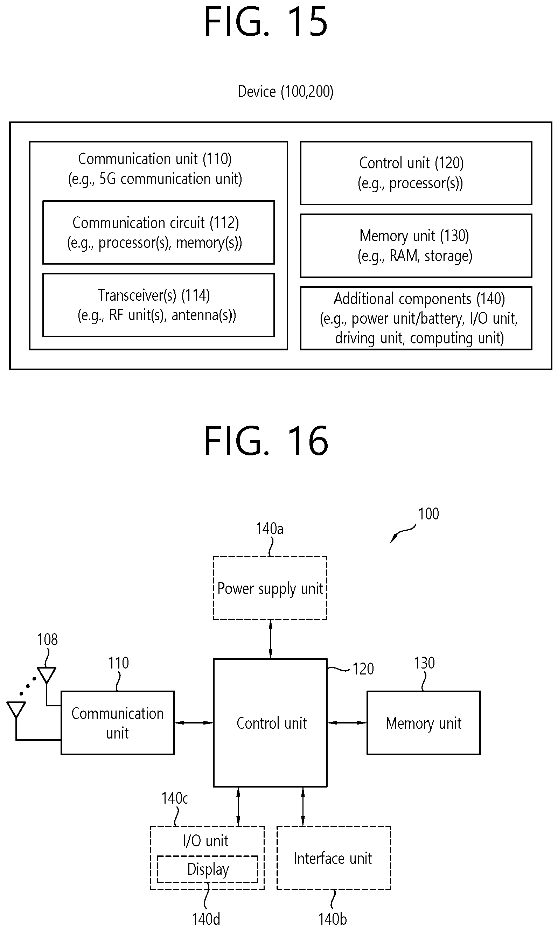

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

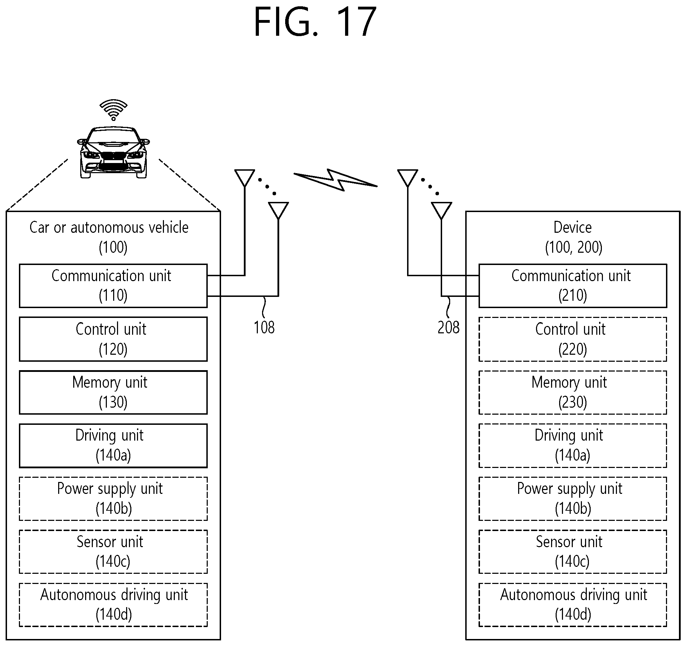

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining (S1010) a sidelink, SL, discontinuous reception, DRX, configuration including information related to a timer related to an SL DRX active time;
receiving (S1020), from a second device, first sidelink control information, SCI, for scheduling of a physical sidelink shared channel, PSSCH, through a physical sidelink control channel, PSCCH;
receiving (S1030), from the second device, i) second SCI including information representing unicast, a source layer 1, L1, ID related to the second device, and a destination L1 ID and ii) a medium access control, MAC, protocol data unit, PDU, including a direct communication request, DCR, message, through the PSSCH; and
determining (S1040) whether to start an SL DRX inactivity timer based on a success of decoding for the second SCI,
wherein only the destination L1 ID included in the second SCI is used in the determination.

2. The method of claim 1, wherein the SL DRX configuration is a default SL DRX configuration.

3. The method of claim 1, wherein the SL DRX inactivity timer is determined to be started.

4. The method of claim 3, wherein the SL DRX inactivity timer is started based on the destination ID being the same as a source L1 ID related to the first device.

5. The method of claim 4, wherein the SL DRX inactivity timer is determined to be started based on a success of decoding for the second SCI and the MAC PDU, and
wherein an operation of the started SL DRX inactivity timer is maintained based on a partial destination ID included in a MAC header in the MAC PDU being the same as a source L2 ID related to the first device.

6. The method of claim 4, wherein the SL DRX inactivity timer is determined to be started based on a success of decoding for the second SCI and the MAC PDU, and
wherein an operation of the started SL DRX inactivity timer is stopped based on a partial destination ID included in a MAC header in the MAC PDU being different from a source L2 ID related to the first device.

7. The method of claim 1, wherein the DCR message is delivered to a higher layer, based on a partial destination ID included in a MAC header of the MAC PDU being the same as a source L2 ID related to the first device.

8. The method of claim 1, wherein the DCR message is discarded, based on a partial destination ID included in a MAC header of the MAC PDU being different from a source L2 ID related to the first device.

9. The method of claim 1, wherein the second device is a device that previously configured a unicast connection with the first device, and
wherein the source ID is deleted, based on a release of the configured unicast connection.

10. The method of claim 1, wherein the second device is a device that has not previously configured a unicast connection with the first device.

11. The method of claim 1, wherein the DCR message is included in a temporally first TB received from the second device.

12. The method of claim 1, wherein the MAC PDU is a temporally first MAC PDU received from the second device.

13. The method of claim 1, further comprising:
transmitting, to the second device, a direct communication accept, DCA, message in response to the DCR message; and
configuring a unicast connection with the second device based on the transmission of the DCA message.

14. A first device (100) for performing wireless communication, the first device (100) comprising:
one or more memories (104) storing instructions;
one or more transceivers (106); and
one or more processors (102) connected to the one or more memories (104) and the one or more transceivers (106), wherein the one or more processors (102) execute the instructions to:
obtain a sidelink, SL, discontinuous reception, DRX, configuration including information related to a timer related to an SL DRX active time;
receive, from a second device, first sidelink control information, SCI, for scheduling of a physical sidelink shared channel, PSSCH, through a physical sidelink control channel, PSCCH;
receive, from the second device, i) second SCI including information representing unicast, a source layer 1, L1 ID related to the second device, and a destination L1 ID and ii) a medium access control, MAC, protocol data unit, PDU, including a direct communication request, DCR, message, through the PSSCH; and
determine whether to start an SL DRX inactivity timer based on a success of decoding for the second SCI,
wherein only the destination L1 ID included in the second SCI is used in the determination.

15. The first device (100) of claim 14, wherein the operations further comprise operations of a method according to any of claims 2 to 13.

## Patentansprüche

1. Verfahren zur Durchführung einer drahtlosen Kommunikation durch eine erste Vorrichtung, wobei das Verfahren Folgendes umfasst:
Erhalten (S1010) einer Sidelink, SL,-diskontinuierlichen Empfangs, DRX,-Konfiguration, die Informationen im Zusammenhang mit einem Timer für eine aktive SL DRX-Zeit einschließt,
Empfangen (S1020), von einer zweiten Vorrichtung, erster Sidelink-Steuerinformationen, SCI, für die Planung eines gemeinsamen physischen Sidelink-Kanals, PSSCH, über einen physischen Sidelink-Steuerkanal, PSCCH;
Empfangen (S1030), von der zweiten Vorrichtung, i) zweiter SCI einschließlich Informationen, die Unicast, eine Quellschicht 1, L1,-ID, die sich auf die zweite Vorrichtung bezieht, und eine Ziel-L1-ID darstellen, und ii) einer Medienzugriffssteuerung, MAC,-Protokolldateneinheit, PDU, einschließlich einer Direktkommunikationsanfrage, DCR,-Nachricht über den PSSCH; und
Bestimmen (S1040), ob ein SL DRX-Inaktivitätstimer basierend auf einem erfolgreichen Decodieren für die zweiten SCI gestartet werden soll,
wobei nur die in den zweiten SCI enthaltene Ziel-L1-ID beim Bestimmen verwendet wird.

2. Verfahren nach Anspruch 1, wobei die SL DRX-Konfiguration eine Standard-SL DRX-Konfiguration ist.

3. Verfahren nach Anspruch 1, wobei bestimmt wird, dass der SL DRX-Inaktivitätstimer gestartet werden soll.

4. Verfahren nach Anspruch 3, wobei der SL DRX-Inaktivitätstimer basierend darauf gestartet wird, dass die Ziel-ID dieselbe ist wie eine Quell-L1-ID, die sich auf die erste Vorrichtung bezieht.

5. Verfahren nach Anspruch 4, wobei der SL DRX-Inaktivitätstimer basierend auf einem erfolgreichen Decodieren für die zweiten SCI und die MAC-PDU gestartet wird, und
wobei ein Betrieb des gestarteten SL DRX-Inaktivitätstimers basierend auf einer in einem MAC-Header in der MAC-PDU enthaltenen Teil-Ziel-ID aufrechterhalten wird, die dieselbe ist wie eine Quell-L2-ID, die sich auf die erste Vorrichtung bezieht.

6. Verfahren nach Anspruch 4, wobei der SL DRX-Inaktivitätstimer basierend auf einem erfolgreichen Decodieren für die zweiten SCI und die MAC-PDU gestartet wird, und
wobei ein Betrieb des gestarteten SL DRX-Inaktivitätstimers basierend auf einer in einem MAC-Header in der MAC-PDU enthaltenen Teil-Ziel-ID gestoppt wird, die sich von einer Quell-L2-ID unterscheidet, die sich auf die erste Vorrichtung bezieht.

7. Verfahren nach Anspruch 1, wobei die DCR-Nachricht an eine höhere Schicht basierend auf einer Teil-Ziel-ID geliefert wird, die in einem MAC-Header der MAC-PDU enthalten ist und dieselbe ist wie eine Quell-L2-ID, die sich auf die erste Vorrichtung bezieht.

8. Verfahren nach Anspruch 1, wobei die DCR-Nachricht basierend auf einer Teil-Ziel-ID verworfen wird, die in einem MAC-Header der MAC-PDU enthalten ist und sich von einer Quell-L2-ID unterscheidet, die sich auf die erste Vorrichtung bezieht.

9. Verfahren nach Anspruch 1, wobei die zweite Vorrichtung eine Vorrichtung ist, die zuvor eine Unicast-Verbindung mit der ersten Vorrichtung konfiguriert hat, und wobei die Quell-ID basierend auf einer Freigabe der konfigurierten Unicast-Verbindung gelöscht wird.

10. Verfahren nach Anspruch 1, wobei die zweite Vorrichtung eine Vorrichtung ist, die zuvor keine Unicast-Verbindung mit der ersten Vorrichtung konfiguriert hat.

11. Verfahren nach Anspruch 1, wobei die DCR-Nachricht in einem zeitlich ersten TB enthalten ist, der von der zweiten Vorrichtung empfangen wird.

12. Verfahren nach Anspruch 1, wobei die MAC-PDU eine zeitlich erste MAC-PDU ist, die von der zweiten Vorrichtung empfangen wird.

13. Verfahren nach Anspruch 1, weiter umfassend:
Übertragen einer DCA-Nachricht (Direct Communication Accept) als Antwort auf die DCR-Nachricht an die zweite Vorrichtung; und
Konfigurieren einer Unicast-Verbindung mit der zweiten Vorrichtung basierend auf der Übertragung der DCA-Nachricht.

14. Erste Vorrichtung (100) zum Durchführen einer drahtlosen Kommunikation, wobei die erste Vorrichtung (100) Folgendes umfasst:
einen oder mehrere Speicher (104), die Anweisungen speichern;
einen oder mehrere Sendeempfänger (106); und
einen oder mehrere Prozessoren (102), die mit dem einen oder den mehreren Speichern (104) und dem einen oder den mehreren Sendeempfängern (106) verbunden sind, wobei der eine oder die mehreren Prozessoren (102) die Anweisungen ausführen zum:
Erhalten einer Sidelink, SL,-diskontinuierlichen Empfangs, DRX,-Konfiguration, die Informationen im Zusammenhang mit einem Timer für eine aktive SL DRX-Zeit einschließt,
Empfangen, von einer zweiten Vorrichtung, erster Sidelink-Steuerinformationen, SCI, für die Planung eines gemeinsamen physischen Sidelink-Kanals, PSSCH, über einen physischen Sidelink-Steuerkanal, PSCCH;
Empfangen, von der zweiten Vorrichtung, i) zweiter SCI einschließlich Informationen, die Unicast, eine Quellschicht 1, L1,-ID, die sich auf die zweite Vorrichtung bezieht, und eine Ziel-L1-ID darstellen, und ii) einer Medienzugriffssteuerung, MAC,-Protokolldateneinheit, PDU, einschließlich einer Direktkommunikationsanfrage, DCR,-Nachricht über den PSSCH; und
Bestimmen, ob ein SL DRX-Inaktivitätstimer basierend auf einem erfolgreichen Decodieren für die zweiten SCI gestartet werden soll,
wobei nur die in den zweiten SCI enthaltene Ziel-L1-ID beim Bestimmen verwendet wird.

15. Erste Vorrichtung (100) nach Anspruch 14, wobei die Vorgänge ferner Vorgänge eines Verfahrens nach einem der Ansprüche 2 bis 13 umfassen.

## Revendications

1. Procédé de réalisation, par un premier dispositif, d'une communication sans fil, le procédé comprenant :
l'obtention (S1010) d'une configuration de réception discontinue, DRX, de liaison latérale, SL, incluant des informations relatives à une temporisation relative à un temps actif DRX SL ;
la réception (S1020), à partir d'un second dispositif, d'une première information de contrôle de liaison latérale, SCI, pour planifier un canal physique partagé de liaison latérale, PSSCH, par le biais d'un canal physique de contrôle de liaison latérale, PSCCH ;
la réception (S1030), à partir du second dispositif, i) d'une seconde SCI incluant des informations représentant une monodiffusion, un ID de couche 1, L1, source, lié au second dispositif, et un ID L1 de destination et ii) d'une unité de données de protocole, PDU, de contrôle d'accès au support, MAC, incluant un message de requête de communication directe, DCR, par le biais du PSSCH ; et
la détermination (S1040) si démarrer une temporisation d'inactivité DRX SL sur la base d'un succès de décodage pour la seconde SCI,
dans lequel seul l'ID L1 de destination inclus dans la seconde SCI est utilisé dans la détermination.

2. Procédé selon la revendication 1, dans lequel la configuration DRX SL est une configuration DRX SL par défaut.

3. Procédé selon la revendication 1, dans lequel la temporisation d'inactivité DRX SL est déterminée comme devant être démarrée.

4. Procédé selon la revendication 3, dans lequel la temporisation d'inactivité DRX SL est démarrée sur la base de l'ID de destination qui est le même qu'un ID L1 source lié au premier dispositif.

5. Procédé selon la revendication 4, dans lequel la temporisation d'inactivité DRX SL est déterminée comme devant être démarrée sur la base d'un succès de décodage pour la seconde SCI et la PDU MAC, et
dans lequel une opération de la temporisation d'inactivité DRX SL démarrée est maintenue sur la base d'un ID de destination partiel inclus dans un en-tête MAC dans la PDU MAC qui est identique à un ID L2 source lié au premier dispositif.

6. Procédé selon la revendication 4, dans lequel la temporisation d'inactivité DRX SL est déterminée comme devant être démarrée sur la base d'un succès de décodage pour la seconde SCI et la PDU MAC, et
dans lequel une opération de la temporisation d'inactivité DRX SL démarrée est arrêtée sur la base d'un ID de destination partiel inclus dans un en-tête MAC dans la PDU MAC qui est différent d'un ID L2 source lié au premier dispositif.

7. Procédé selon la revendication 1, dans lequel le message DCR est délivré à une couche supérieure, sur la base d'un ID de destination partiel inclus dans un en-tête MAC de la PDU MAC qui est le même qu'un ID L2 source lié au premier dispositif.

8. Procédé selon la revendication 1, dans lequel le message DCR est rejeté, sur la base d'un ID de destination partiel inclus dans un en-tête MAC de la PDU MAC qui est différent d'un ID L2 source lié au premier dispositif.

9. Procédé selon la revendication 1, dans lequel le second dispositif est un dispositif qui a précédemment configuré une connexion monodiffusion avec le premier dispositif, et
dans lequel l'ID source est supprimé, sur la base d'une libération de la connexion monodiffusion configurée.

10. Procédé selon la revendication 1, dans lequel le second dispositif est un dispositif qui n'a pas précédemment configuré une connexion monodiffusion avec le premier dispositif.

11. Procédé selon la revendication 1, dans lequel le message DCR est inclus dans un premier TB temporaire reçu à partir du second dispositif.

12. Procédé selon la revendication 1, dans lequel la PDU MAC est une première PDU MAC temporaire reçue à partir du second dispositif.

13. Procédé selon la revendication 1, comprenant en outre :
la transmission, au second dispositif, d'un message d'acceptation de communication directe, DCA, en réponse au message DCR ; et
la configuration d'une connexion monodiffusion avec le second dispositif sur la base de la transmission du message DCA.

14. Premier dispositif (100) pour la réalisation de communication sans fil, le premier dispositif (100) comprenant :
une ou plusieurs mémoires (104) stockant des instructions ;
un ou plusieurs émetteurs-récepteurs (106) ; et
un ou plusieurs processeurs (102) connectés aux une ou plusieurs mémoires (104) et aux un ou plusieurs émetteurs-récepteurs (106), dans lequel les un ou plusieurs processeurs (102) exécutent les instructions pour :
obtenir une configuration de réception discontinue, DRX, de liaison latérale, SL, incluant des informations relatives à une temporisation relative à un temps actif DRX SL ;
recevoir, à partir d'un second dispositif, une première information de contrôle de liaison latérale, SCI, pour planifier un canal physique partagé de liaison latérale, PSSCH, par le biais d'un canal physique de contrôle de liaison latérale, PSCCH ;
recevoir, à partir du second dispositif, i) une seconde SCI incluant des informations représentant une monodiffusion, un ID de couche 1, L1, source, lié au second dispositif, et un ID L1 de destination et ii) une unité de données de protocole, PDU, de contrôle d'accès au support, MAC, incluant un message de requête de communication directe, DCR, par le biais du PSSCH ; et
déterminer si démarrer une temporisation d'inactivité DRX SL sur la base d'un succès de décodage pour la seconde SCI,
dans lequel seul l'ID L1 de destination inclus dans la seconde SCI est utilisé dans la détermination.

15. Le premier dispositif (100) selon la revendication 14, dans lequel les opérations comprennent en outre des opérations d'un procédé selon l'une quelconque des revendications 2 à 13.
